# EUROPEAN PATENT SPECIFICATION

(11) **EP 3 901 816 B1**
(45) Date of publication and mention of the grant of the patent: **14.01.2026**
(21) Application number: 19898889.1
(22) Date of filing: 22.11.2019
(51) Int. Cl.: G06T 7/00, G06V 10/44, G06V 10/80, G06V 40/18, G06F 18/25

(54) **GLAUCOMA IMAGE RECOGNITION METHOD AND DEVICE AND SCREENING SYSTEM**
VERFAHREN UND VORRICHTUNG ZUR ERKENNUNG VON GLAUKOMBILDERN UND SCREENINGSYSTEM
PROCÉDÉ ET DISPOSITIF DE RECONNAISSANCE D'IMAGE DE GLAUCOME ET SYSTÈME DE CRIBLAGE

(30) Priority: 19.12.2018 CN 201811557812
(43) Date of publication of application: 27.10.2021
(73) Proprietor: Shanghai Eaglevision Medical Technology Co., Ltd., Shanghai 200030 (CN)
(72) Inventor: ZHAO, Xin, Shanghai 200030 (CN); CHEN, Lijian, Shanghai 200030 (CN); HUANG, Yelin, Shanghai 200030 (CN); XIONG, Jianhao, Shanghai 200030 (CN); ZHANG, Dalei, Shanghai 200030 (CN)
(74) Representative: BSB Patentanwälte Schütte & Engelen Partnerschaft mbB
(86) International application number: PCT/CN2019/120215
(87) International publication number: WO 2020/125319

(56) References cited:
- CN-A- 106 214 120
- CN-A- 106 214 120
- CN-A- 108 717 868
- CN-A- 109 684 981
- CN-A- 109 697 716
- US-A1- 2011 190 657
- US-A1- 2018 140 180
- LIM GILBERT ET AL: "Integrated Optic Disc and Cup Segmentation with Deep Learning", 2013 IEEE 25TH INTERNATIONAL CONFERENCE ON TOOLS WITH ARTIFICIAL INTELLIGENCE, IEEE, 9 November 2015 (2015-11-09), pages 162 - 169, XP032846672, ISSN: 1082-3409, [retrieved on 20160104], DOI: 10.1109/ICTAI.2015.36
- AL-BANDER BAIDAA ET AL: "Dense Fully Convolutional Segmentation of the Optic Disc and Cup in Colour Fundus for Glaucoma Diagnosis", SYMMETRY, vol. 10, no. 4, 30 March 2018 (2018-03-30), pages 87, XP055937752, DOI: 10.3390/sym10040087
- SHANKARANARAYANA SHARATH M ET AL: "Joint Optic Disc and Cup Segmentation Using Fully Convolutional and Adversarial Networks", 9 September 2017, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 168 - 176, ISBN: 978-3-540-74549-5, XP047439808
- THAKUR NIHARIKA ET AL: "Survey on segmentation and classification approaches of optic cup and optic disc for diagnosis of glaucoma", BIOMEDICAL SIGNAL PROCESSING AND CONTROL, vol. 42, 1 April 2018 (2018-04-01), NL, pages 162 - 189, XP055937808, ISSN: 1746-8094, DOI: 10.1016/j.bspc.2018.01.014

## Description

### Technical Field

The present disclosure relates to the field of eye detection devices, and in particular, to a glaucoma image recognition method, device and screening system.

### Background

Glaucoma is an irreversible blinding fundus disease. In screening or clinical diagnosis, the doctor can determine whether the examined person may suffer from glaucoma by observing a fundus image, and then make suggestions for further examination or consultation.

During clinical diagnosis, the ophthalmologist can make judgments by observing the optic cup and the optic disc in the fundus image. For example, the optic cup is too large, resulting in a too large ratio of the optic cup to the optic disc, then the examined person is likely to suffer from glaucoma, wherein the cup-disc ratio is generally a vertical diameter ratio of the optic cup to the optic disc.

However, ophthalmologist's estimation on the cup-disc ratio or the disc rim form by means of the naked eye or a photographing device is highly subjective and lacks objectivity based on data, resulting in inaccurate results and consuming a lot of time and effort. Some example of a such application is disclosed in US 2018/140180 A1 but it lacks disc rim construction and modular network structure.

### Summary

In view of this, the present disclosure provides a glaucoma image recognition method, including the following steps:
acquiring a fundus image;
extracting a local image from the fundus image, the local image including an optic disc and a fundus background;
obtaining, based on the fundus image or the local image, an optic disc image and an optic cup image;
obtaining a disc rim image based on the optic disc image and the optic cup image; and
determining, based on the disc rim image, the local image and the fundus image, whether the fundus image is classified as glaucoma or not.

Optionally, the extracting a local image from the fundus image further includes:
recognizing, using a first machine learning model, a local region from the fundus image the local region including an optic disc and a fundus background; and
extracting the local region to form the local image, the local image having a same color as the fundus image.

Optionally, the obtaining, based on the fundus image or the local image, an optic disc image and an optic cup image further includes:
recognizing, using a second machine learning model, the optic disc image from the local image; and
recognizing, using a third machine learning model, the optic cup image from the local image.

Optionally, both the optic disc image and the optic cup image are binary images.

Optionally, the disc rim image includes a background region beyond the optic disc, an optic cup region and a disc rim region, and these regions are marked with different grayscale values.

Optionally, the determining, based on the disc rim image, the local image and the fundus image, whether the fundus image is classified as glaucoma or not further includes:
recognizing, using a fourth machine learning model, the disc rim image, the local image and the fundus image to output a glaucoma image determination result.

Optionally, the fourth machine learning model includes a first feature extraction unit, a second feature extraction unit, a third feature extraction unit, a feature fusion unit, and a determination unit; and the recognizing, using a fourth machine learning model, the disc rim image, the local image and the fundus image to output a glaucoma image determination result further includes:
extracting, using the first feature extraction unit, a first feature from the disc rim image;
extracting, using the second feature extraction unit, a second feature from the local image;
extracting, using the third feature extraction unit, a third feature from the fundus image;
fusing, using the feature fusion unit, the first feature, the second feature and the third featureto form a fused feature; and
outputting, using the determination unit, the glaucoma image determination result based on the fused feature.

Correspondingly, the present disclosure provides a glaucoma image recognition apparatus, including:
an acquisition unit, configured to acquire a fundus image;
a local recognition unit, configured to extract a local image from the fundus image, the local image including an optic disc and a fundus background;
a region recognition unit, configured to obtain an optic disc image and an optic cup image based on the fundus image;
a disc rim determination unit, configured to obtain a disc rim image based on the optic disc image and the optic cup image; and
a glaucoma recognition unit, configured to determine whether the fundus image is classified as glaucoma based on the disc rim image, the local image and the fundus image.

Correspondingly, the present disclosure further provides a glaucoma image recognition device, including: at least one processor and a memory communicatively coupled to the at least one processor; wherein the memory stores instructions executable by the at least one processor, and the instructions are executed by the at least one processor to cause the at least one processor to execute the above-mentioned glaucoma image recognition method.

The present disclosure further provides a glaucoma disease screening system, including:
a fundus photographing device, configured to capture a fundus image; and the above-mentioned glaucoma image recognition device.

According to the glaucoma image recognition method provided by the present disclosure, a local image is first obtained from a fundus image, most of a fundus background is removed, an optic disc image and an optic cup image are further extracted, and a disc rim image is obtained based on the two images. Finally, the disc rim image, the local image and the fundus image are recognized, and whether the fundus image is classified as glaucoma or not is determined based on global features, local features and disc rim features. This solution obtains a determination result of glaucoma based on image data and objective algorithms, saving human resources and effectively assisting doctors or experts in diagnosing glaucoma disease.

### Brief Description of the Drawings

In order to describe the technical solutions in the specific embodiments of the present disclosure or in the prior art more clearly, the following briefly introduces the accompanying drawings required for describing the specific embodiments or the prior art. Clearly, the accompanying drawings in the following description show only some embodiments of the present disclosure, and those of ordinary skilled in the art may still derive other drawings from these accompanying drawings without creative efforts.
Fig. 1 is a flowchart of a glaucoma image recognition method according to an embodiment of the present disclosure;
Fig. 2 is a flowchart of a detailed glaucoma image recognition method according to an embodiment of the present disclosure;
Fig. 3 is a fundus image after clipping according to an embodiment of the present disclosure;
Fig. 4 is a local image including an optic disc according to an embodiment of the present disclosure;
Fig. 5 is a sample image according to an embodiment of the present disclosure;
Fig. 6 is a schematic diagram of obtaining an optic disc binary image according to an embodiment of the present disclosure;
Fig. 7 is a schematic diagram of obtaining an optic cup binary image according to an embodiment of the present disclosure;
Fig. 8 is a disc rim image according to an embodiment of the present disclosure;
Fig. 9 is another disc rim image according to an embodiment of the present disclosure;
Fig. 10 is a schematic diagram of obtaining a colored disc rim image according to an embodiment of the present disclosure;
Fig. 11 is a schematic structural diagram of a glaucoma image recognition apparatus according to an embodiment of the present disclosure;
Fig. 12 is a schematic structural diagram of a machine learning model according to an embodiment of the present disclosure;
Fig. 13 is a schematic structural diagram of a glaucoma disease screening system according to an embodiment of the present disclosure.

### Detailed Description of Embodiments

The following clearly and completely describes the technical solutions of the present disclosure with reference to the accompanying drawings. Apparently, the described embodiments are part of, not all of, the embodiments of the present disclosure. All other embodiments obtained by those of ordinary skill in the art based on the embodiments of the present disclosure without any creative effort shall fall within the protection scope of the present disclosure.

In the description of the present disclosure, it should be noted that the orientation or position relations indicated by the terms "center", "upper", "lower", "left", "right", "vertical" "horizontal", "inner", "outer", etc. are based on the orientation or position relations shown in the accompanying drawings and are intended to facilitate the description of the present disclosure and simplify the description only, rather than indicating or implying that the device or element referred to must have a particular orientation or be constructed and operated in a particular orientation, and will not to be interpreted as limiting the present disclosure. Moreover, the terms "first", "second", "third" and "fourth" are for descriptive purposes only and should not be construed as indicating or implying relative importance.

Further, the technical features involved in different embodiments of the present disclosure described below may be combined with each other as long as they do not constitute a conflict with each other.

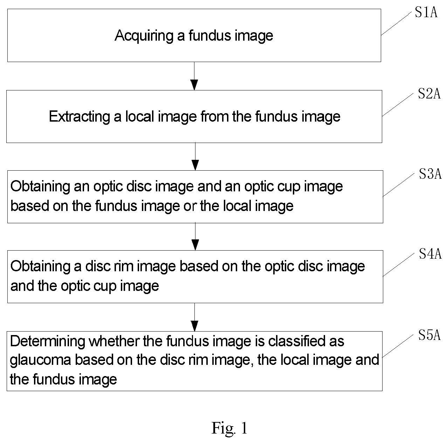

The present disclosure provides a glaucoma image recognition method, which can be performed by an electronic device such as a computer, a server, or a portable terminal. As shown in Fig. 1, the method includes the following steps:
S1A, a fundus image is acquired. The fundus image is usually a color image, and in the embodiment of the present disclosure, it may also be a single-channel grayscale image or even a binary image.
S2A, a local image is extracted from the fundus image, and the local image includs an optic disc and a fundus background. The proportion of the optic disc in the local image is greater than the proportion of the optic disc in the original fundus image, the local image may include the optic disc and a small part of fundus background content, and the shape of the image may be a set regular shape, such as a square image or a circular image. Most of the fundus background content can be removed in this step.
S3A, an optic disc image and an optic cup image are obtained according to the fundus image or the local image. There can be a variety of specific extraction methods, for example, an optic disc region and an optic cup region are searched and extracted based on the principle of machine vision in accordance with pixel value features to form images; or the two regions are recognized and extracted using artificial intelligence algorithms and trained machine learning models to form images.
   The local image is a part of the fundus image, the extraction of the optic disc image and the optic cup image based on the local image can improve the recognition efficiency, and the recognition of the optic disc image and the optic cup image based on the overall fundus image is also feasible.
S4A, a disc rim image is obtained according to the optic disc image and the optic cup image. The optic cup region is within the optic disc region. In an embodiment, the optic cup region can be removed from the optic disc region, and an image of an annular region is usually obtained. The expression of a disc rim region may be an image showing only the disc rim region, for example, an annular region exists in a single-color background.
   In another embodiment, the optic disc region and the optic cup region may also be retained in the disc rim image, and the disc rim region is identified.
S5A, whether the fundus image is classified as glaucoma or not is determined according to the disc rim image, the local image and the fundus image. In an embodiment, morphological features of the disc rim can be respectively extracted from the three images based on the principle of machine vision, and the features of the three images are integrated to obtain a final conclusion; or features are respectively extracted from the three images to obtain three conclusions, and then the three conclusions are integrated to obtain a final conclusion. In another embodiment, the three images can be recognized using artificial intelligence algorithms and trained machine learning models to output recognition results.

Generally, the orientation of the fundus image acquired is identical to the orientation of the human body, that is, the upper and lower parts of the image are the upper and lower parts of the human body, and the two sides of the image are the nasal side and the bitemporal of the human body (the orientations of left and right eye images are opposite). If the acquired image angle is relatively special, the image angle can be adjusted after step S1 to be identical to the orientation of the human body.

In practical applications, the output in step S5A may be a piece of information for expressing the possibility of glaucoma disease, such as percentage information; or conclusive information such as negative or positive may also be outputted. This information can be used as a basis for the doctor to determine glaucoma disease.

According to the glaucoma image recognition method provided by the embodiment of the present disclosure, a local image is first obtained from a fundus image, most of a fundus background is removed, an optic disc image and an optic cup image are further extracted, and a disc rim image is obtained according to the two images. Finally, the disc rim image, the local image and the fundus image are recognized, and whether the fundus image is classified as glaucoma or not is determined by integrating an overall feature, a local feature and a disc rim feature. This solution obtain a determination result of glaucoma based on image data and objective algorithms, which saves human resources and can effectively assist doctors or experts in diagnosing glaucoma disease.

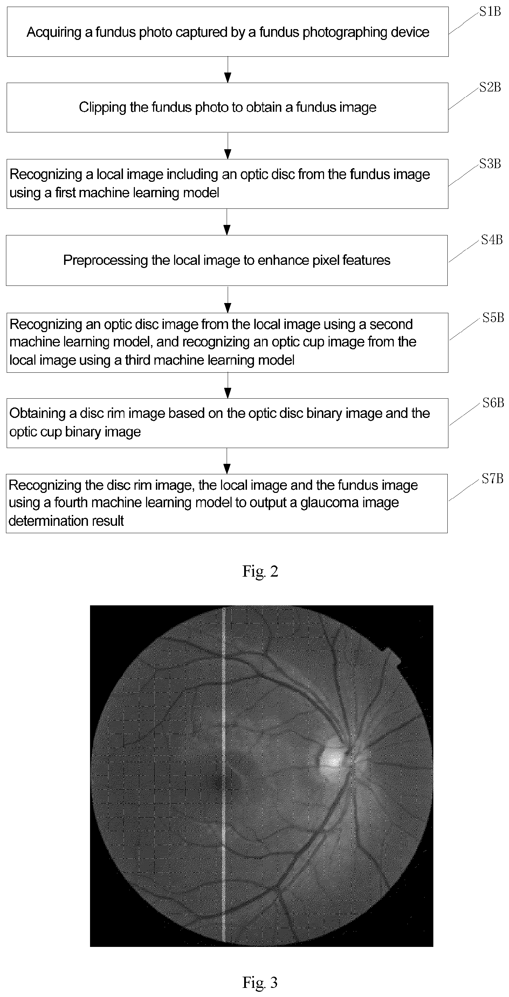

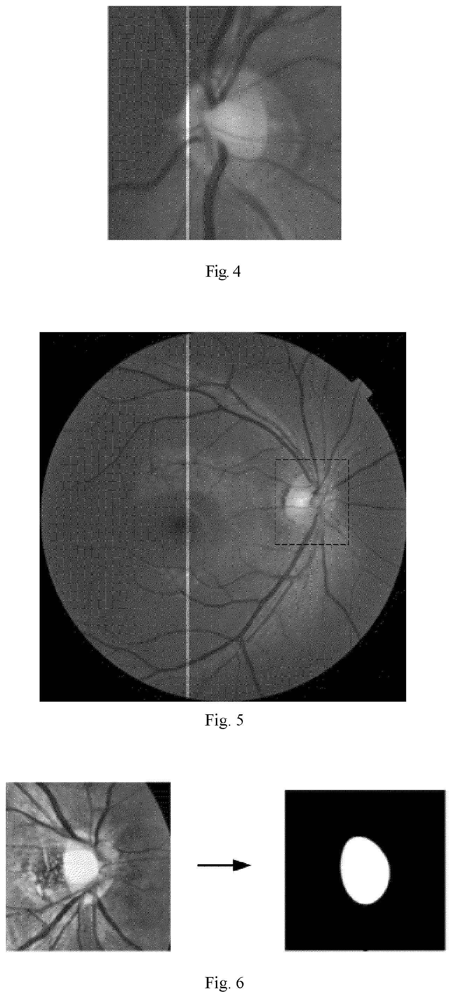

An embodiment of the present disclosure provides adetailed glaucoma image recognition method. In this method, images are recognized using machine learning models, which may be a variety of neural networks. As shown in Fig. 2, the method includes the following steps:
S1B, a fundus photo captured by a fundus photographing device is acquired. The fundus photo is generally an image with a black background which may include some text information.
S2B, the fundus photo is clipped to obtain a fundus image, edges of the image just accommodating a circular fundus region. As shown in Fig. 3, four edges of the clipped image intersect edges of the fundus region respectively. This clipping operation is an optimization process for subsequently recognizing the image using a machine learning model, where the clipping operation may not be performed in other embodiments, or more content is clipped while at least a complete optic disc region is retained.
S3B, a local image including an optic disc is recognized from the fundus image using a first machine learning model. The proportion of the optic disc occupied in the local image is greater than the proportion of the optic disc occupied in the original fundus image. The local image may include the optic disc and a small part of fundus background content, and the shape of the image may be a set regular shape, such as a square image or a circular image. Most of the fundus background content can be removed in this step to obtain a local image mainly focused on the optic disc as shown in Fig. 4.

Before the machine learning model is used for recognition, it should be trained with training data. With regard to the training process of the first machine learning model, the embodiment of the present disclosure provides a preferred model training scheme. In the training phase, a valid region including the optic disc is first manually labeled in the fundus image to obtain training data, for example, the dashed box shown in Fig. 5 is the label content, and the form of the label box entering the machine learning model is (x, y, height, width), where x and y are coordinates of a point at the upper left corner of the label box in the image, and height and width are respectively the height and width of the label box. A large number of fundus images and label boxes are inputted into the model together for training, the model can predict the position of the valid region including the optic disc by means of learning to output results in the same form as the label boxes.

The embodiment of the present disclosure may employ the existing deep detection model as the first machine learning model, such as SSD, YOLO or Faster-RCNN, or construct a custom depth network model.

In this embodiment, the local image is consistent with the original fundus image in color, as a process of detecting and capturing an image. In other embodiments, an image with variable color channels, such as a grayscale image, may also be obtained.

S4B, the local image is preprocessed to enhance pixel features. Specifically, the local image may be enhanced by Contrast Limited Adaptive Histogram Equalization (CLAHE). This step can highlight the features in the image, and contours of the optic disc and the optic cup can be found more quickly during image recognition after the preprocessing, thereby improving the accuracy and efficiency of recognition.

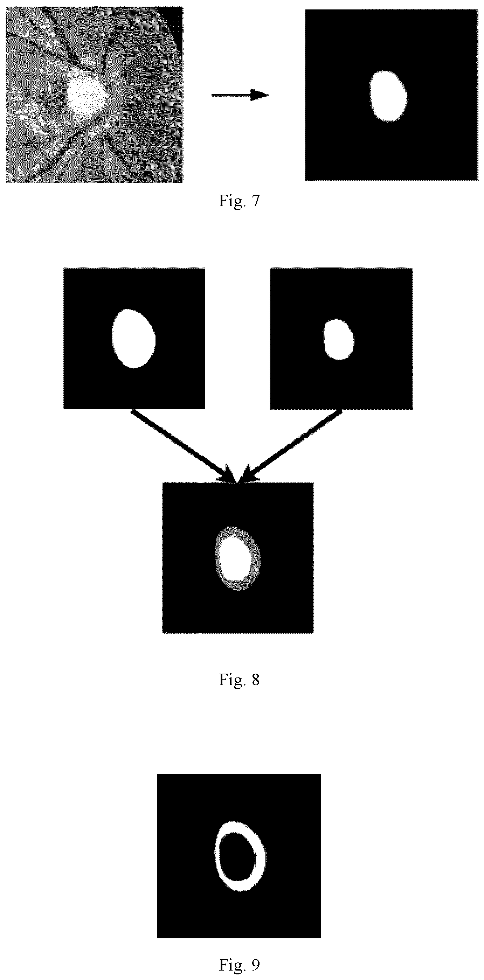

S5B, an optic disc image is recognized from the local image using a second machine learning model, and an optic cup image is recognized from the local image using a third machine learning model. More accurate region segmentation results are obtained in this step. The contours of the optic disc and the optic cup in the image are identical to the contours of the optic disc and the optic cup of the human body, and they are usually of irregular shapes. The optic disc image as shown in Fig. 6 and the optic cup image as shown in Fig. 7 can be obtained after recognition.

With regard to the training process of the second machine learning model and the third machine learning model, the embodiment of the present disclosure provides a preferred model training scheme. Specifically, the optic disc is precisely manually labeled during training, and then a filling mask as shown in Fig. 6 is generated based on the manually labeled contour, wherein the white represents the optic disc region, and the black represents the background. Finally, the clipped optic disc region and the corresponding mask are inputted into the model together for training, and the model recognizes the optic disc region by means of learning and segments it. The labeling and segmentation of the optic cup follow the same step.

The embodiment of the present disclosure may employ the existing deep detection models as the second and third machine learning models, such as U-Net, Mask R-CNN and DeepLabV3, or construct custom deep segmentation models.

In this embodiment, the second machine learning model outputs an optic disc binary image, wherein the grayscale value of the background is 0, and the grayscale value of the optic disc region is 255; and the third machine learning model outputs an optic cup binary image, wherein the grayscale value of the background is 0, and the grayscale value of the optic cup region is 255. This is a preferred processing method used for capturing a disc rim image later. In other embodiments, images in the same color as the original fundus image may also be outputted.

S6B, a disc rim image is obtained according to the optic disc binary image and the optic cup binary image. In this embodiment, the disc rim image includes a background region, an optic cup region and a disc rim region beyond the optic disc, and these regions are marked with different grayscale values. For example, the binary images in Fig. 6 and Fig. 7 are combined to obtain a disc rim image shown in Fig. 8, wherein the grayscale value of the background region is 0, and the grayscale value of the optic cup region is 255. The disc rim region is an annular region in the optic disc region that is not covered by the optic cup region, and its grayscale value can be set to, for example, 128. During actual processing, the three regions can be marked with any three obviously different grayscale values, which are not limited to the values in the above example.

In another embodiment, the disc rim image may also include only a disc rim region and a background region, for example, the binary image in Fig. 7 is subtracted from the binary image in Fig. 6 to obtain a binary image shown in Fig. 9, wherein the white ring represents the disc rim region.

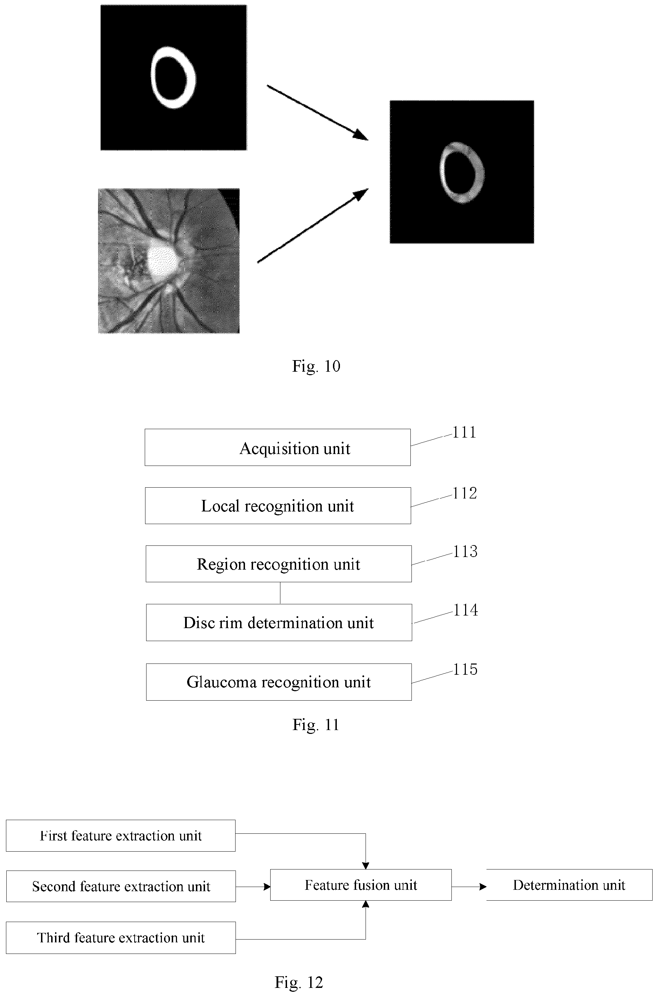

The disc rim image may also be further captured from the fundus image according to a disc rim binary image. The disc rim binary image shown in Fig. 9 provides a capture position and range, and the disc rim image shown in Fig. 10 can be captured from the original fundus image or the local image in S3B. This step is to obtain the color of the original fundus image.

In another embodiment, the optic disc image and the optic cup image are grayscale images or color images, or two grayscale images or color images are directly subtracted to obtain a disc rim image of the corresponding color.

S7B, the disc rim image, the local image and the fundus image are recognized using a fourth machine learning model to output a glaucoma image determination result. In this embodiment, the local image (which may be the enhanced local image on the left side in Fig. 6 or Fig. 7, or the non-enhanced image shown in Fig. 4), the global fundus image (the clipped image shown in Fig. 3 or the original fundus image), and the disc rim image (the disc rim image shown in Fig. 8 or Fig. 9 or Fig. 10) are inputted into the model.

The structure and processing of the fourth machine learning model have many options. The embodiment of the present disclosure may employ the existing deep detection model as the fourth machine learning model, such as inceptionV3 or ResNet, or design a deep recognition model.

As a preferred embodiment, the fourth machine learning model in this embodiment includes a first feature extraction unit, a second feature extraction unit, a third feature extraction unit, a feature fusion unit, and a determination unit. Specifically, step S8 includes the following steps:
A first feature is extracted from the disc rim image using the first feature extraction unit;
A second feature is extracted from the local image using the second feature extraction unit;
A third feature is extracted from the fundus image using the third feature extraction unit;
The first feature, the second feature and the third feature are fused using the feature fusion unit to form a fused feature; and
A glaucoma image determination result is outputted using the determination unit according to the fused feature.

Regarding the training process of the fourth machine learning model, a combination of different glaucoma images (global fundus images, local images, optic disc local images, and disc rim images) and a combination of different non-glaucoma images are cyclically inputted during training, so that the model learns the differences of the two. The output result may be two types, that is, negative or positive (yes or no), or percentage (probability) information, such as a probability that the image is a glaucoma image or the image is not a glaucoma image.

According to the glaucoma image recognition method provided by the embodiment of the present disclosure, the captured fundus photo is first clipped to remove interference content, so that a machine learning model can more accurately segment a local image that is primarily based on an optic disc and that occupies a smaller region compared to the large fundus image; the local image is recognized by two machine learning models respectively to accurately output a binary image of an optic disc region and a binary image of an optic cup region, and the binary images are combined to obtain a disc rim image efficiently and accurately; and the features of the three images are integrated by a machine learning model in the final recognition process to obtain a recognition result, thereby improving the accuracy of glaucoma image determination.

Correspondingly, an embodiment of the present disclosure further provides a glaucoma image recognition apparatus, as shown in Fig. 11, the apparatus including:
an acquisition unit 111, configured to acquire a fundus image;
a local recognition unit 112, configured to extract a local image from the fundus image, the local image including an optic disc and a fundus background;
a region recognition unit 113, configured to obtain an optic disc image and an optic cup image according to the fundus image;
a disc rim determination unit 114, configured to obtain a disc rim image according to the optic disc image and the optic cup image; and
a glaucoma recognition unit 115, configured to determine whether the fundus image is classified as glaucoma or not according to the disc rim image, the local image and the fundus image.

In a preferred embodiment, the local recognition unit 112 includes:
a first machine learning model, configured to recognize a local region from the fundus image, the local region including an optic disc and a fundus background; and
an image capture unit, configured to extract the local region to form the local image, the local image having the same color as the fundus image.

As a preferred embodiment, the region recognition unit 113 includes:
a second machine learning model, configured to recognize the optic disc image from the local image; and
a third machine learning model, configured to recognize the optic cup image from the local image.

As a preferred embodiment, the glaucoma recognition unit 115 includes:
a fourth machine learning model, configured to recognize the disc rim image, the local image and the fundus image to output a glaucoma image determination result.

Further, as shown in Fig. 12, the fourth machine learning model includes:
a first feature extraction unit, configured to extract a first feature from the disc rim image;
a second feature extraction unit, configured to extract a second feature from the local image;
a third feature extraction unit, configured to extract a third feature from the fundus image;
a feature fusion unit, configured to fuse the first feature, the second feature and the third feature to form a fused feature; and
a determination unit, configured to output the glaucoma image determination result according to the fused feature.

The feature extraction units may be convolutional neural networks, the feature fusion unit may be a neural network having a fully connected layer, and the determination unit may be a neural network or a classifier or the like.

An embodiment of the present disclosure further provides an electronic device, including: at least one processor and a memory communicatively coupled to the at least one processor; wherein the memory stores instructions executable by the at least one processor, and the instructions are executed by the at least one processor to cause the at least one processor to execute the glaucoma image recognition method in the above embodiment.

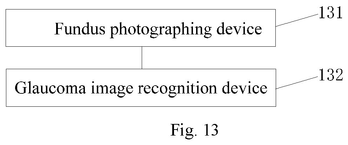

An embodiment of the present disclosure further provides a glaucoma disease screening system, as shown in Fig. 13, including:
a fundus photographing device 131, configured to capture a fundus image; and
a glaucoma image recognition device 132, configured to execute the glaucoma image recognition method in the above embodiment.

A person skilled in the art should understand that the embodiments of the present disclosure may be provided as a method, a system, or a computer program product. Therefore, the present disclosure may be in the form of a full hardware embodiment, a full software embodiment, or an embodiment combining software and hardware. In addition, the present disclosure may be in the form of a computer program product implemented on one or more computer available storage media (including but not limited to a disk memory, a CD-ROM, an optical memory, and the like) including computer available program codes.

The present disclosure is described with reference to flow diagrams and/or block diagrams of the method, equipment (system), and the computer program product in the embodiments of the present disclosure. It should be understood that computer program instructions can implement each process and/or block in the flowcharts and/or block diagrams and a combination of processes and/or blocks in the flowcharts and/or block diagrams. These computer program instructions may be provided to a general-purpose computer, a dedicated computer, an embedded processor, or a processor of other programmable data processing equipment to generate a machine, so that a device configured to implement functions specified in one or more processes in the flowcharts and/or one or more blocks in the block diagrams is generated by using instructions executed by the general-purpose computer or the processor of other programmable data processing equipment.

These computer program instructions may also be stored in a computer readable memory that can guide a computer or other programmable data processing equipment to work in a specific manner, so that the instructions stored in the computer readable memory generate a product including an instruction device, where the instruction device implements functions specified in one or more processes in the flowcharts and/or one or more blocks in the block diagrams.

These computer program instructions may also be loaded into a computer or other programmable data processing equipment, so that a series of operation steps are performed on the computer or other programmable data processing device to generate processing implemented by a computer, and instructions executed on the computer or other programmable data processing equipment provide steps for implementing functions specified in one or more processes in the flowcharts and/or one or more blocks in the block diagrams.

It is apparent that the above embodiments are merely illustrative of the examples, and are not intended to limit the embodiments. Other variations or modifications of different forms may be made by those of ordinary skill in the art in light of the above description. There is no need and no way to exhaust all of the embodiments. Obvious variations or modifications resulting therefrom are still within the scope of the present disclosure.

## Claims

1. A method for recognizing glaucoma, **characterized in that** the method comprising:
acquiring a fundus image;
extracting a local image from the fundus image, the local image including an optic disc and a small part of fundus background, wherein the proportion of the optic disc in the local image is greater than the proportion of the optic disc in the fundus image;
extracting an optic cup region and an optic disc region from the fundus image or the local image, to form an optic disc image and an optic cup image;
obtaining a disc rim image by removing the optic cup region from the optic disc region based on the optic disc image and the optic cup image; and
determining, based on the disc rim image, the local image and the fundus image, whether the fundus image is classified as glaucoma or not;
wherein the determining, based on the disc rim image, the local image and the fundus image, whether the fundus image is classified as glaucoma or not further comprises:
recognizing, using a fourth machine learning model, the disc rim image, the local image and the fundus image to output a glaucoma image determination result; and
the fourth machine learning model comprises a first feature extraction unit, a second feature extraction unit, a third feature extraction unit, a feature fusion unit, and a determination unit; and the recognizing the disc rim image, the local image and the fundus image to output a glaucoma image determination result further comprises:
Extracting, using the first feature extraction unit, a first feature from the disc rim image;
Extracting, using the second feature extraction unit, a second feature from the local image;
Extracting, using the third feature extraction unit, a third feature from the fundus image;
Fusing, using the feature fusion unit, the first feature, the second feature and the third feature to form a fused feature; and
Outputting, using the determination unit, the glaucoma image determination result based on the fused feature.

2. The method according to claim 1, **characterized in that** the extracting a local image from the fundus image further comprises:
recognizing, using a first machine learning model, a local region from the fundus image, the local region comprising an optic disc and a fundus background; and
extracting the local region to form the local image, the local image having a same color as the fundus image.

3. The method according to claim 1 or 2, **characterized in that** the obtaining, based on the fundus image or the local image, an optic disc image and an optic cup image further comprises:
recognizing, using a second machine learning model, the optic disc image from the local image; and
recognizing, using a third machine learning model, the optic cup image from the local image.

4. The method according to any one of claims 1-3, **characterized in that** both the optic disc image and the optic cup image are binary images.

5. The method according to any one of claims 1-4, **characterized in that** the disc rim image comprises a background region beyond the optic disc, an optic cup region and a disc rim region, and these regions are marked with different grayscale values.

6. A computer storage medium, storing instructions thereon that, when executed on a computer, cause the computer to implement the glaucoma image recognition method according to any one of claims 1-5.

7. A computer program product comprising instructions that, when executed on a computer, causing the computer to implement the glaucoma image recognition method according to any one of claims 1-5.

8. A glaucoma image recognition device, **characterized in that** the device comprises: at least one processor and a memory communicatively coupled to the at least one processor; wherein the memory stores instructions executable by the at least one processor, and the instructions are executed by the at least one processor to cause the at least one processor to execute the glaucoma image recognition method according to any one of claims 1-5.

9. A glaucoma disease screening system, **characterized in that** the system comprises:
a fundus photographing device, configured to capture a fundus image; and
the glaucoma image recognition device according to claim 8.

## Patentansprüche

1. Verfahren zum Erkennen eines Glaukoms, **dadurch gekennzeichnet, dass** das Verfahren Folgendes umfasst:
Erfassen eines Augenhintergrundbildes,
Extrahieren eines lokalen Bildes aus dem Hintergrundbild, wobei das lokale Bild einen Sehnervenkopf und einen kleinen Teil des Augenhintergrundes beinhaltet, wobei der Anteil des Sehnervenkopfs in dem lokalen Bild größer als der Anteil des Sehnervenkopfs in dem Augenhintergrundbild ist,
Extrahieren einer Papillenexkavationsregion und einer Sehnervenkopfregion aus dem Augenhintergrundbild oder dem lokalen Bild, um ein Sehnervenkopfbild und ein Papillenexkavationsbild zu bilden,
Erhalten eines Papillarrandbildes durch Entfernen der Papillenexkavationsregion aus der Sehnervenkopfregion, basierend auf dem Sehnervenkopfbild und dem Papillenexkavationsbild, und
Bestimmen, ob das Augenhintergrundbild als Glaukom klassifiziert ist oder nicht, basierend auf dem Papillarrandbild, dem lokalen Bild und dem Augenhintergrundbild,
wobei das Bestimmen, ob das Augenhintergrundbild als Glaukom klassifiziert ist oder nicht, basierend auf dem Papillarrandbild, dem lokalen Bild und dem Augenhintergrundbild, ferner Folgendes umfasst:
Erkennen des Papillarrandbildes, des lokalen Bildes und des Augenhintergrundbildes unter Verwendung eines vierten Maschinenlernmodells, um ein Glaukombildbestimmungsergebnis auszugeben, und
wobei das vierte Maschinenlernmodell eine erste Merkmalextraktionseinheit, eine zweite Merkmalextraktionseinheit, eine dritte Merkmalextraktionseinheit, eine Merkmalvereinigungseinheit und eine Bestimmungseinheit umfasst, und das Erkennen des Papillarrandbildes, des lokalen Bildes und des Augenhintergrundbildes, um ein Glaukombildbestimmungsergebnis auszugeben, ferner Folgendes umfasst:
Extrahieren eines ersten Merkmals aus dem Papillarrandbild unter Verwendung der ersten Merkmalextraktionseinheit,
Extrahieren eines zweiten Merkmals aus dem lokalen Bild unter Verwendung der zweiten Merkmalextraktionseinheit,
Extrahieren eines dritten Merkmals aus dem Augenhintergrundbild unter Verwendung der dritten Merkmalextraktionseinheit,
Vereinigen des ersten Merkmals, des zweiten Merkmals und des dritten Merkmals unter Verwendung der Merkmalvereinigungseinheit, um ein vereinigtes Merkmal zu bilden, und
Ausgeben des Glaukombildbestimmungsergebnisses unter Verwendung der Bestimmungseinheit, basierend auf dem vereinigten Merkmal.

2. Verfahren nach Anspruch 1, **dadurch gekennzeichnet, dass** das Extrahieren eines lokalen Bildes aus dem Augenhintergrundbild ferner Folgendes umfasst:
Erkennen einer lokalen Region aus dem Augenhintergrundbild unter Verwendung des ersten Maschinenlernmodells, wobei die lokale Region einen Sehnervenkopf und einen Augenhintergrund umfasst, und
Extrahieren der lokalen Region, um das lokale Bild zu bilden, wobei das lokale Bild die gleiche Farbe wie das Augenhintergrundbild aufweist.

3. Verfahren nach Anspruch 1 oder 2, **dadurch gekennzeichnet, dass** das Erhalten eines Sehnervenkopfbildes und eines Papillenexkavationsbildes, basierend auf dem Augenhintergrundbild oder dem lokalen Bild, ferner Folgendes umfasst:
Erkennen des Sehnervenkopfbildes aus dem lokalen Bild unter Verwendung eines zweiten Maschinenlernmodells und
Erkennen des Papillenexkavationsbildes aus dem lokalen Bild unter Verwendung eines dritten Maschinenlernmodells.

4. Verfahren nach einem der Ansprüche 1 bis 3, **dadurch gekennzeichnet, dass** sowohl das Sehnervenkopfbild als auch das Papillenexkavationsbild binäre Bilder sind.

5. Verfahren nach einem der Ansprüche 1 bis 4, **dadurch gekennzeichnet, dass** das Papillarrandbild eine Hintergrundregion über den Sehnervenkopf hinaus, eine Papillenexkavationsregion und eine Papillarrandregion umfasst und diese Regionen mit unterschiedlichen Graustufenwerten markiert sind.

6. Computerspeichermedium, auf dem Anweisungen gespeichert sind, die bei Ausführung auf einem Computer den Computer veranlassen, das Verfahren zum Erkennen eines Glaukoms nach einem der Ansprüche 1 bis 5 zu implementieren.

7. Computerprogrammprodukt, Anweisungen umfassend, die bei Ausführung auf einem Computer den Computer veranlassen, das Verfahren zum Erkennen eines Glaukoms nach einem der Ansprüche 1 bis 5 zu implementieren.

8. Vorrichtung zum Erkennen eines Glaukoms, **dadurch gekennzeichnet, dass** die Vorrichtung Folgendes umfasst: mindestens einen Prozessor und einen Speicher, der kommunikationsfähig mit dem mindestens einen Prozessor gekoppelt ist, wobei der Speicher Anweisungen speichert, die von dem mindestens einen Prozessor ausführbar sind, und die Anweisungen von dem mindestens einen Prozessor ausgeführt werden, um den mindestens einen Prozessor zu veranlassen, das Verfahren zum Erkennen eines Glaukoms nach einem der Ansprüche 1 bis 5 auszuführen.

9. Glaukom-Screening-System, **dadurch gekennzeichnet, dass** das System Folgendes umfasst:
eine Vorrichtung zum Fotografieren eines Augenhintergrundes, die dafür konfiguriert ist, ein Augenhintergrundbild aufzunehmen, und
die Vorrichtung zum Erkennen eines Glaukoms nach Anspruch 8.

## Revendications

1. Procédé de reconnaissance du glaucome, **caractérisé en ce que** le procédé comprend :
l'acquisition d'une image du fond de l'œil ;
l'extraction d'une image locale à partir de l'image du fond de l'œil, l'image locale comprenant un disque optique et une petite partie de l'arrière-plan du fond de l'œil, dans lequel la proportion du disque optique dans l'image locale est supérieure à la proportion du disque optique dans l'image du fond de l'œil ;
l'extraction d'une région de la cavité optique et d'une région du disque optique à partir de l'image du fond de l'œil ou de l'image locale, afin de former une image du disque optique et une image de la cavité optique ;
l'obtention d'une image du rebord du disque en supprimant la région de la cupule optique de la région du disque optique sur la base de l'image du disque optique et de l'image de la cupule optique ; et
la détermination, sur la base de l'image du rebord du disque, de l'image locale et de l'image du fond de l'œil, si l'image du fond de l'œil est classée comme glaucome ou non ;
dans lequel la détermination, sur la base de l'image du rebord du disque, de l'image locale et de l'image du fond de l'œil, si l'image du fond de l'œil est classée comme glaucome ou non, comprend en outre :
la reconnaissance, à l'aide d'un quatrième modèle d'apprentissage automatique, de l'image du rebord du disque, de l'image locale et de l'image du fond de l'œil afin de produire un résultat de détermination de l'image du glaucome ; et
le quatrième modèle d'apprentissage automatique comprend une première unité d'extraction de caractéristiques, une deuxième unité d'extraction de caractéristiques, une troisième unité d'extraction de caractéristiques, une unité de fusion de caractéristiques et une unité de détermination ; et la reconnaissance de l'image du rebord du disque, de l'image locale et de l'image du fond de l'œil afin de produire un résultat de détermination de l'image du glaucome comprend en outre :
l'extraction, à l'aide de la première unité d'extraction de caractéristiques, d'une première caractéristique à partir de l'image du rebord du disque ;
l'extraction, à l'aide de la deuxième unité d'extraction de caractéristiques, d'une deuxième caractéristique à partir de l'image locale ;
l'extraction, à l'aide de la troisième unité d'extraction de caractéristiques, d'une troisième caractéristique à partir de l'image du fond de l'œil ;
la fusion, à l'aide de l'unité de fusion de caractéristiques, de la première caractéristique, de la deuxième caractéristique et de la troisième caractéristique pour former une caractéristique fusionnée ; et
la sortie, à l'aide de l'unité de détermination, du résultat de détermination de l'image du glaucome sur la base de la caractéristique fusionnée.

2. Procédé selon la revendication 1, **caractérisé en ce que** l'extraction d'une image locale à partir de l'image du fond de l'œil comprend en outre :
la reconnaissance, à l'aide d'un premier modèle d'apprentissage automatique, d'une région locale à partir de l'image du fond de l'œil,
la région locale comprenant un disque optique et un arrière-plan du fond de l'œil ; et
l'extraction de la région locale pour former l'image locale, l'image locale ayant la même couleur que l'image du fond de l'œil.

3. Procédé selon la revendication 1 ou la revendication 2, **caractérisé en ce que** l'obtention, sur la base de l'image du fond de l'œil ou de l'image locale, d'une image du disque optique et d'une image de la cupule optique comprend en outre :
la reconnaissance, à l'aide d'un deuxième modèle d'apprentissage automatique, de l'image du disque optique à partir de l'image locale ; et
la reconnaissance, à l'aide d'un troisième modèle d'apprentissage automatique, de l'image de la cupule optique à partir de l'image locale.

4. Procédé selon l'une quelconque des revendications 1 à 3, **caractérisé en ce que** l'image du disque optique et l'image de la cupule optique sont toutes deux des images binaires.

5. Procédé selon l'une quelconque des revendications 1 à 4, **caractérisé en ce que** l'image du rebord du disque comprend une région d'arrière-plan au-delà du disque optique, une région de cupule optique et une région de rebord du disque, et ces régions sont marquées avec des valeurs de gris différentes.

6. Support de stockage informatique, stockant des instructions qui, lorsqu'elles sont exécutées sur un ordinateur, amènent l'ordinateur à mettre en œuvre le procédé de reconnaissance d'images de glaucome selon l'une quelconque des revendications 1 à 5.

7. Produit de programme informatique comprenant des instructions qui, lorsqu'elles sont exécutées sur un ordinateur, amènent l'ordinateur à mettre en œuvre le procédé de reconnaissance d'images de glaucome selon l'une quelconque des revendications 1 à 5.

8. Dispositif de reconnaissance d'images de glaucome, **caractérisé en ce que** le dispositif comprend : au moins un processeur et une mémoire couplée de manière communicative à au moins un processeur ; dans lequel la mémoire stocke des instructions exécutables par au moins un processeur, et les instructions sont exécutées par au moins un processeur pour amener au moins un processeur à exécuter le procédé de reconnaissance d'images de glaucome selon l'une quelconque des revendications 1 à 5.

9. Système de dépistage de la maladie du glaucome, **caractérisé en ce que** le système comprend :
un dispositif de photographie du fond de l'œil, configuré pour capturer une image du fond de l'œil ; et
le dispositif de reconnaissance d'images de glaucome selon la revendication 8.
